# DEMANDE DE BREVET EUROPEEN

(11) **EP 1 936 145 A2**
(43) Date de publication de la demande: **25.06.2008**
(21) Numéro de dépôt: 07291412.0
(22) Date de dépôt: 27.11.2007
(51) Int. Cl.: F02B 23/10, G01M 15/04

(54) **Moteur à combustion interne à allumage commandé, notamment moteur pour essais, en particulier sur bancs moteur**

(30) Priorité: 19.12.2006 FR 0611165
(71) Demandeur: IFP, 92852 Rueil-Malmaison Cédex (FR)
(72) Inventeur: Clair, Romain, Escalier 6, F-78560 Le Port Marly (FR); Cherel, Jérôme, 78560 Le Port Marly (FR)

(57) **Abrégé**

La présente invention concerne un moteur à combustion interne à allumage commandé et à injection directe de carburant, notamment moteur pour essais en particulier sur bancs, comprenant une culasse (10), un cylindre (14) sur lequel est fixé ladite culasse en délimitant une chambre de combustion (16) avec le piston contenu dans ledit cylindre, un injecteur de carburant (18) d'axe XX et une bougie d'allumage (20) placée à proximité de l'injecteur.
Selon l'invention, le moteur comprend un dispositif de support de bougie (24) comprenant un coulisseau mobile (54) portant la bougie (20) en permettant le déplacement de ladite bougie par rapport à l'injecteur (28) de carburant.

## Description

La présente invention se rapporte à un moteur à combustion interne à allumage commandé, notamment à un moteur pour essais en particulier sur bancs.

Elle concerne plus particulièrement les moteurs à combustion interne à injection directe de carburant.

Elle vise plus particulièrement les moteurs, dits optiques, qui permettent d'observer le déroulement de la combustion au sein de la chambre de combustion.

Généralement, ce type de moteurs, comme mieux décrit dans la demande de brevet français N° 2 812 392 du demandeur, comprend un bloc moteur avec un attelage mobile conventionnel comprenant un vilebrequin, une bielle et un piston coulissant dans une première partie de cylindre. Ce piston porte, de manière fixe, une entretoise à l'extrémité de laquelle prend appui un autre piston, dit piston actif, qui coulisse dans une deuxième partie de cylindre. Cette deuxième partie de cylindre permet de délimiter avec le haut du piston et avec un bloc culasse, que comporte habituellement le moteur, une chambre de combustion. Ce bloc culasse comprend une culasse qui comporte, pour l'essentiel, des moyens d'admission et des moyens d'échappement avec généralement une tubulure et une soupape ainsi qu'un dispositif d'injection de carburant et un moyen d'allumage du mélange carburé, tel qu'une bougie.

Comme mieux décrit dans ce document, l'entretoise est creuse et comporte un miroir, qui renvoie vers un moyen d'observation, au travers d'une portion de paroi transparente de l'entretoise, une image des phénomènes internes à la chambre de combustion, tels que ceux se produisant lors de la combustion. Pour réaliser cette visualisation, le piston actif comprend une partie transparente, comme une pastille de quartz résistant aux hautes températures, au travers de laquelle les images des phénomènes internes à la chambre de combustion sont envoyées au miroir.

Généralement, dans ce type de moteurs, l'injecteur de carburant est un injecteur multi-jets qui projette le carburant dans la chambre de combustion sous la forme d'un cône de jets avec un angle de nappe de jets spécifique pour réaliser un mélange carburé avec le fluide contenu dans cette chambre.

Par angle de jets, il est entendu l'angle au sommet que forme le cône constitué par la paroi périphérique fictive passe par tous les axes des jets de carburant.

La bougie est, quant à elle, conventionnellement placée sur la culasse de façon à ce que l'étincelle qu'elle génère au niveau de ses électrodes soit réalisée à proximité du cône de jets ou à l'intérieur de ce cône pour initier la combustion du mélange carburé présent dans la chambre de combustion.

De tels moteurs, bien que donnant satisfaction, présentent néanmoins des inconvénients non négligeables.

En effet, lorsqu'il s'agit de réaliser une série d'essais avec ce genre de moteurs, on est amené à utiliser plusieurs types d'injecteurs différents tant au niveau du nombre de jets qu'au niveau de l'angle de jets.

De ce fait, il est nécessaire de prévoir une panoplie complète de bougies d'allumage adaptées à chaque type d'injecteur et d'associer par tâtonnement l'injecteur avec la bougie qui lui convient pour assurer l'allumage du mélange carburé.

Outre le fait que cela demande de prévoir une grande quantité de bougies à disposition, de telles associations injecteurs/bougies entraînent de nombreuses manipulations pour réaliser l'adéquation entre l'injecteur et sa bougie ainsi qu'un coût élevé pour la réalisation de ces essais.

La présente invention se propose de remédier aux inconvénients ci-dessus grâce à un moteur qui comporte un support de bougie qui permet d'utiliser un seul type de bougie pour toutes sortes d'injecteurs.

A cet effet, la présente invention concerne un moteur à combustion interne à allumage commandé et à injection directe de carburant, notamment moteur pour essais en particulier sur bancs, comprenant une culasse, un cylindre sur lequel est fixé ladite culasse en délimitant une chambre de combustion avec le piston contenu dans ledit cylindre, un injecteur de carburant d'axe XX et une bougie d'allumage placée à proximité de l'injecteur, caractérisé en ce que le moteur comprend un dispositif de support de bougie comprenant un coulisseau mobile portant la bougie en permettant le déplacement de ladite bougie par rapport à l'injecteur de carburant.

Le dispositif de support peut comprendre un bâti fixe recevant ledit coulisseau.

Le bâti peut comprendre une base avec un alésage pour le passage des électrodes de la bougie.

Le dispositif de support peut comprendre un moyen de déplacement du coulisseau par rapport au bâti.

Le moyen de déplacement comprend un écrou fileté relié axialement au bâti et coopérant avec une zone filetée du coulisseau.

Le dispositif de support peut comprendre un moyen de verrouillage du déplacement du coulisseau.

Le moyen de verrouillage peut comprendre un contre-écrou agissant sur l'écrou.

Le coulisseau peut comprendre un tube cylindrique muni d'un fond avec au moins une partie du tube coopérant avec le bâti.

Le coulisseau peut comprendre des moyens d'immobilisation en rotation par rapport au bâti.

Le tube peut comprendre un filetage intérieur au voisinage du fond et un filetage extérieur au voisinage de son autre extrémité.

Le dispositif de support peut comprendre un moyen d'immobilisation de la bougie dans le coulisseau.

Avantageusement, la bougie peut comprendre des rallonges pour les électrodes.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue partielle schématique en perspective d'une partie du moteur selon l'invention ;
- la figure 2 qui est une autre vue en perspective partielle de la partie du moteur de la figure 1 ;
- la figure 3 qui est une vue partielle en coupe radiale de la partie du moteur de la figure 1 et
- la figure 4 qui est une vue en perspective du support de bougie d'allumage de la figure 1.

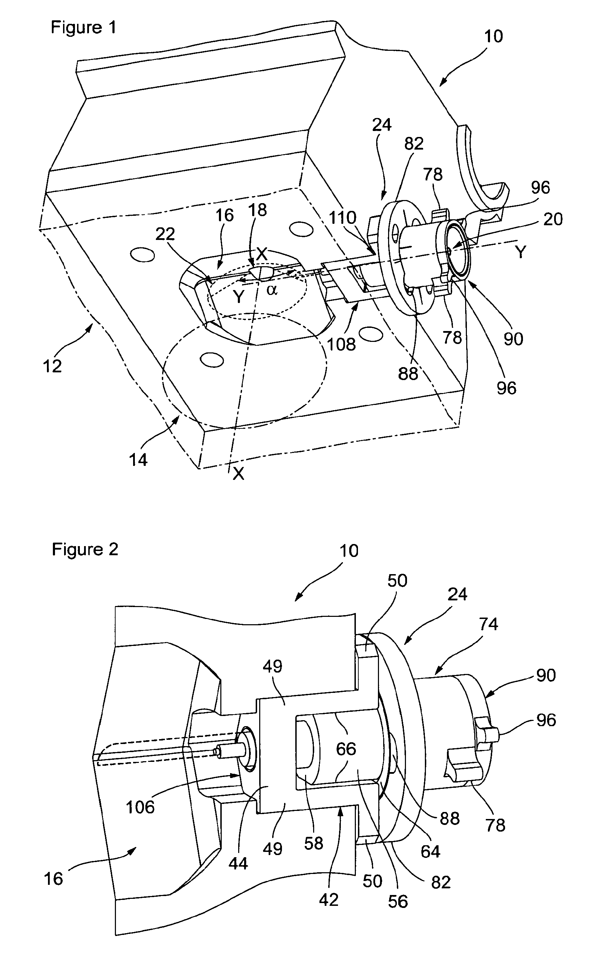

La figure 1 montre une partie d'un moteur à combustion interne à allumage commandé, notamment d'un moteur pour essais en particulier sur bancs.

Elle concerne plus particulièrement les moteurs à combustion interne à injection directe de carburant et vise plus particulièrement les moteurs optiques qui permettent d'observer le déroulement de la combustion d'un mélange carburé au sein de la chambre de combustion.

Ce moteur comprend une culasse 10 qui vient habituellement coiffer un bloc-moteur 12 avec un cylindre 14 comprenant un piston (non représenté) coulissant dans ce cylindre. Cette culasse forme avec le piston et la paroi latérale du cylindre une chambre de combustion 16 d'axe XX dont seule une portion est montrée au niveau de la culasse sur les figures.

De manière conventionnelle, la culasse comporte, pour l'essentiel, des moyens d'admission et des moyens d'échappement (non représentés) avec généralement une tubulure et une soupape, ainsi que des moyens d'injection de carburant 18 et des moyens d'allumage 20 du mélange carburé contenu dans la chambre de combustion, tels qu'une bougie.

Les moyens d'injection de carburant sont un injecteur 18 multi-jets de carburant placé sensiblement verticalement dans l'axe longitudinal médian XX de la chambre de combustion 16. Cet injecteur projette dans la chambre de combustion une multiplicité de jets de carburant en formant un cône de jets 22 issu du nez de cet injecteur avec un angle au sommet du cône ou angle de nappe α.

En se rapportant en plus aux figures 2 à 4, la bougie 20 est avantageusement orientée selon un axe YY sensiblement orthogonale à celui de la chambre de combustion et par conséquent à celui de l'injecteur 18 en étant portée par un dispositif de support 24.

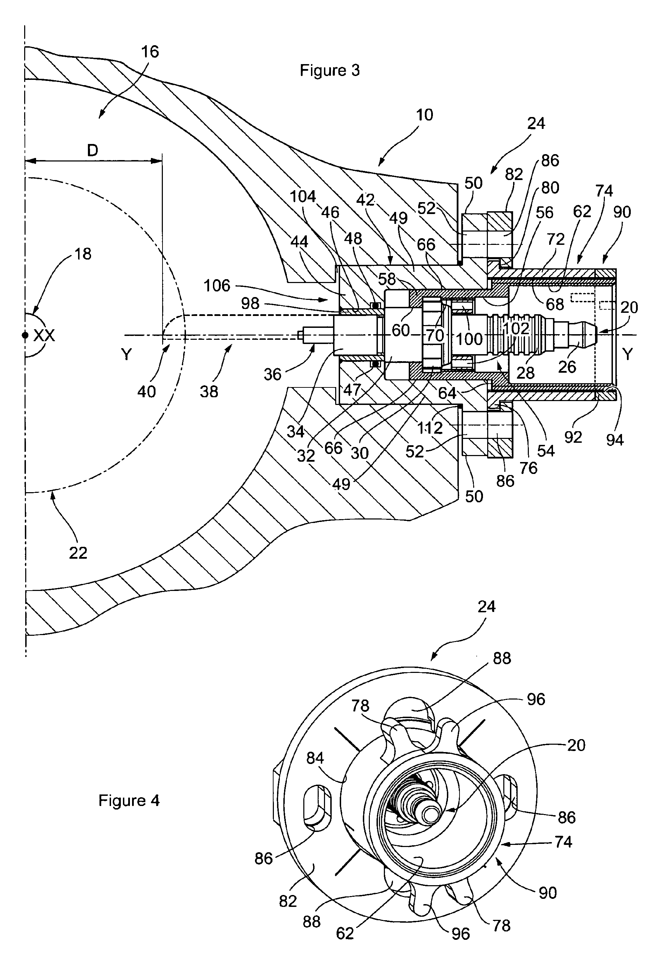

Cette bougie (figure 3) comprend généralement, dans un sens axial, une borne d'alimentation 26, un corps isolant 28, un organe pour l'entraînement en rotation de fixation 30, généralement sous la forme d'un six pans, une embase d'appui 32, un culot fileté 34 et des électrodes 36 qui sont, dans le cas de moteurs d'essais, poursuivies par des rallonges 38 permettant de former un point d'allumage 40 entre les extrémités de ces rallonges et à distance du culot.

Le dispositif de support de cette bougie comprend un bâti 42 en forme de U avec une base 44 comportant un alésage 46 portant une rainure 47 logeant un joint d'étanchéité 48, deux bras 49 orthogonaux à la base, deux saillies 50 perpendiculaires extérieurement aux extrémités des bras et portant des orifices de fixation 52 du bâti sur le moteur.

Le dispositif de support comprend également un coulisseau creux 54 portant la bougie et qui est placé à l'intérieur de cet U. Ce coulisseau se présente sous la forme d'un tube cylindrique 56, dénommé dans la suite de la description cylindre de guidage, avec un fond 58 en regard de la base 44 et portant un orifice lisse 60. A l'opposé du fond 58, le cylindre de guidage se prolonge, de manière monobloc, par une autre partie tubulaire cylindrique 62, désignée en tant que cylindre de commande, de plus grand diamètre extérieur que le cylindre 56 de façon à former un épaulement 64 entre les deux cylindres. Avantageusement, le cylindre de guidage comprend sur sa périphérie deux méplats 66, diamétralement opposés, dont l'écartement correspond à la dimension intérieure entre les deux bras 49 du bâti. Le cylindre de commande 62 porte sur sa périphérie externe un filetage 68 qui s'étend de l'épaulement 64 jusqu'aux environs de son extrémité libre et le cylindre de guidage 56 porte sur sa périphérie interne un filetage 70 qui s'étend au moins sur une partie de la hauteur de ce cylindre. Avantageusement, la hauteur entre la face externe du fond 58 et l'épaulement 64 est plus petite que la hauteur de la partie interne du U entre la face interne de la base 44 et la face externe des ailes 50. De manière encore plus avantageuse, le diamètre externe du cylindre de guidage 56 est au plus égal à l'épaisseur du bâti 42.

Ce dispositif de support comprend aussi des moyens de commande en déplacement du coulisseau 54 qui consistent, dans l'exemple montré, en un tube fileté intérieurement 72, de diamètre interne correspondant au diamètre fileté 68 du cylindre de commande 62, et formant un écrou d'actionnement 74. Ce tube est muni, à son extrémité la plus proche du bâti, d'une collerette 76 saillante radialement vers l'extérieur du tube 72 et prenant appui à glissement sur les saillies 50 du bâti. Ce tube comprend également, au voisinage de son autre extrémité, deux oreilles 78 diamétralement opposées et saillantes à partir de la paroi périphérique externe de l'écrou. Pour assurer le maintien de l'écrou d'actionnement 74 sur le bâti 42, la collerette 76 est emprisonnée entre les saillies 50 et un lamage 80 porté par un flasque 82. Ce flasque comprend en outre un évidement central 84 pour le passage de l'écrou 74, deux trous de fixation 86 en correspondance avec les orifices 52 des saillies 50 et deux passages radiaux 88 débouchant sur l'évidement central 84 pour le passage des oreilles 78.

Pour assurer le blocage en position du coulisseau par rapport au bâti, il est prévu une autre partie tubulaire cylindrique semblable à l'écrou d'actionnement et formant contre-écrou 90. Ce contre-écrou comporte un tube creux 92, de diamètres interne et externe sensiblement identiques à celui de l'écrou 74, dont la surface interne est munie d'un filetage 94 et dont la surface externe porte deux excroissances de manipulation 96 diamétralement opposées et saillantes à partir de la paroi périphérique externe de ce contre-écrou.

Pour assurer le montage de la bougie dans le coulisseau et l'assemblage de l'ensemble avec le bâti, le culot fileté 34 de la bougie 20 est préalablement équipé d'un fourreau 98 vissé sur ce culot grâce à un filetage intérieur et dont le diamètre externe correspond sensiblement au diamètre interne de l'alésage 46. Ceci a pour but de rendre possible un mouvement par glissement et à étanchéité de ce fourreau dans cet alésage grâce au joint 48 et à éviter toute fuite de fluide de la chambre de combustion vers l'extérieur du moteur. La bougie est ensuite glissée à l'intérieur du coulisseau 54 de manière à ce que les électrodes avec leurs rallonges, le culot fileté portant son fourreau, et l'embase d'appui 32 traversent l'orifice 60 du fond 58. Le mouvement selon l'axe YY est poursuivi jusqu'à ce que l'organe de fixation 30 à six pans de cette bougie prenne appui sur le fond du coulisseau. Une fois cette position atteinte, la bougie est immobilisée dans ce coulisseau par la mise en place et le vissage d'une rondelle 100, filetée extérieurement et munie de cavités 102 pour la réception d'un outil de vissage, qui coopère avec le filetage intérieur 70. Avantageusement, l'écrou 74 et le contre-écrou 90 sont ensuite vissés sur le filetage 68 du cylindre de commande 62 de façon à ce que la face externe de la collerette 76 soit préférentiellement sensiblement au même niveau que l'épaulement 64 entre les deux cylindres. Ce sous-ensemble est ensuite introduit à l'intérieur du bâti 44 en faisant glisser le fourreau 98 dans l'alésage 46, en faisant correspondre les méplats 66 du cylindre de guidage avec les faces internes des bras 49 et préférentiellement en mettant en butée l'épaulement 64 sur la face externe des saillies 50. Une fois cette position atteinte, le flasque 82 est glissé le long du contre-écrou et de l'écrou par passage des excroissances 96 et des oreilles 78 au travers des passages 88 du flasque jusqu'à ce que ce flasque soit au contact des saillies 50.

L'ensemble ainsi formé est placé dans une cavité de réception 104 prévue sur le moteur et plus précisément au niveau de la culasse 10. Cette cavité de forme parallélépipédique rectangle a des dimensions qui correspondent à celles du bâti 42 et plus particulièrement à son épaisseur, à sa largeur entre les deux faces externes des bras 49 et à sa hauteur entre la face externe de la base et la face interne des saillies 50.

La cavité comprend une face ouverte 106 communiquant avec la chambre de combustion 16, une face ouverte 108 en direction du bloc-moteur et qui sera fermée par le joint de culasse (non représenté) prévu entre la culasse et le bloc-moteur et une face ouverte 110 pour l'introduction du support. Au préalable de cette introduction, un joint d'étanchéité 112 est placé sur la face interne des saillies 50 pour assurer l'étanchéité entre le bâti et la culasse puis l'ensemble est introduit dans la cavité 104 en prenant soin de faire correspondre les alésages 52 des saillies 50 et les trous 86 du flasque 82 avec des orifices filetés (non représentés) prévus sur la culasse. Une immobilisation, par vissage de tiges par exemple, du support dans la culasse est ensuite réalisée au travers des alésages et trous.

Une fois ce montage réalisé, le point d'allumage 40 de la bougie se trouve situé à une distance D de l'axe XX de l'injecteur (figure 3).

Lorsque l'on souhaite modifier la distance D de ce point d'allumage 40 en l'éloignant ou en rapprochant de l'axe XX, il suffit de dévisser le contre-écrou 90 en agissant sur les excroissances 96 pour libérer l'écrou 74. Par action sur les oreilles 78 de l'écrou 74, qui entraînent une rotation de cet écrou dans un sens ou dans l'autre et de par la coopération des filetages entre l'écrou et le cylindre de commande, le coulisseau se rapproche ou s'éloigne de l'axe XX. En conséquence, le point d'allumage 40 de la bougie se rapproche ou s'éloigne de cet axe. Une fois que la position souhaitée (par exemple par calcul) du coulisseau est atteinte et par conséquent celle du point d'allumage, un vissage du contre-écrou 90 permet l'immobilisation du coulisseau dans cette position en empêchant toute rotation de l'écrou 74.

Grâce à cela, il est possible d'obtenir une multiplicité de positions du point d'allumage 40 dans un déplacement radial et ainsi positionner ce point dans n'importe quelle localisation par rapport au cône de jets de carburant.

La présente invention n'est pas limitée à l'exemple décrit ci-dessus mais englobe toute variante et équivalent.

## Revendications

1. Moteur à combustion interne à allumage commandé et à injection directe de carburant, notamment moteur pour essais en particulier sur bancs, comprenant une culasse (10), un cylindre (14) sur lequel est fixé ladite culasse en délimitant une chambre de combustion (16) avec le piston contenu dans ledit cylindre, un injecteur de carburant (18) d'axe XX et une bougie d'allumage (20) placée à proximité de l'injecteur, **caractérisé en ce que** le moteur comprend un dispositif de support de bougie (24) comprenant un coulisseau mobile (54) portant la bougie (20) en permettant le déplacement de ladite bougie par rapport à l'injecteur (28) de carburant.

2. Moteur à combustion interne selon la revendication 1, **caractérisé en ce que** le dispositif de support comprend un bâti fixe (42) recevant ledit coulisseau.

3. Moteur à combustion interne selon la revendications 2, **caractérisé en ce que** le bâti comprend une base (44) avec un alésage (46) pour le passage des électrodes (36, 38) de la bougie (20).

4. Moteur à combustion interne selon la revendication 1 ou 2, **caractérisé en ce que** le dispositif de support comprend un moyen de déplacement (74) du coulisseau par rapport au bâti.

5. Moteur à combustion interne selon la revendication 4, **caractérisé en ce que** le moyen de déplacement comprend un écrou fileté (74) relié axialement au bâti et coopérant avec une zone filetée (68) du coulisseau.

6. Moteur à combustion interne selon l'une des revendications précédentes, **caractérisé en ce que** le dispositif de support comprend un moyen de verrouillage (92) du déplacement du coulisseau.

7. Moteur à combustion interne selon la revendication 6, **caractérisé en ce que** le moyen de verrouillage comprend un contre-écrou (90) agissant sur l'écrou (74).

8. Moteur à combustion interne selon l'une des revendications précédentes, **caractérisé en ce que** le coulisseau comprend un tube cylindrique (56, 62) muni d'un fond (58) avec au moins une partie du tube (56) coopérant avec le bâti (42).

9. Moteur à combustion interne selon l'une des revendications précédentes, **caractérisé en ce que** le coulisseau comprend des moyens d'immobilisation en rotation (66) par rapport au bâti.

10. Moteur à combustion interne selon la revendication 8, **caractérisé en ce que** le tube comprend un filetage intérieur (70) au voisinage du fond (58) et un filetage extérieur (68) au voisinage de son autre extrémité.

11. Moteur à combustion interne selon l'une des revendications précédentes, **caractérisé en ce que** le dispositif de support comprend un moyen d'immobilisation (100) de la bougie (20) dans le coulisseau (64).

12. Moteur à combustion interne selon la revendication 1, **caractérisé en ce que** la bougie (20) comprend des rallonges (38) pour les électrodes (36).
